(19) Europäisches Patentamt / European Patent Office / Office européen des brevets

(11) **EP 4 206 789 A1**

(12) **EUROPEAN PATENT APPLICATION**

(43) Date of publication:
**05.07.2023 Bulletin 2023/27**

(21) Application number: **22213685.5**

(22) Date of filing: **15.12.2022**

(51) International Patent Classification (IPC):
**G02B 27/01** (2006.01) **G02B 5/26** (2006.01)
**G02B 5/28** (2006.01) **G02B 27/10** (2006.01)
**G02B 5/18** (2006.01) **G02B 5/20** (2006.01)

(52) Cooperative Patent Classification (CPC):
**G02B 27/0101; G02B 5/1861; G02B 5/203;
G02B 5/26; G02B 27/102; G02B 27/104;
G02B 27/1086;** G02B 5/287; G02B 5/288;
G02B 2027/0112

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 US 202163266260 P**

(71) Applicant: **3M Innovative Properties Company
Saint Paul, MN 55133-3427 (US)**

(72) Inventors:
• **MARKOWITZ, Matthew
Brooklyn 11230 (US)**

• **COTRUFO, Michele
New York 10030 (US)**
• **ALU, Andrea
Tenafly 07670 (US)**
• **HAO, Bing
St. Paul 55133-3427 (US)**
• **SCHARDT, Craig R.
St. Paul 55133-3427 (US)**
• **GUO, Xuexue
St. Paul 55133-3427 (US)**
• **STENSVAD, Karl K.
St. Paul 55133-3427 (US)**

(74) Representative: **Mathys & Squire
Theatinerstraße 7
80333 München (DE)**

(54) **MULTIBAND RESONANT GRATINGS**

(57)    An optical combiner includes a first layer with a periodic arrangement of structures of a material with a first refractive index. A second layer overlies the structures on the first layer, and the second layer includes a material with a second refractive index. A difference between the first refractive index and the second refractive index, measured at 587.5 nm, is less than 1.5. The periodic arrangement of structures is configured such that the optical combiner produces, for an input signal incident on the first layer from air at an oblique elevation angle of greater than 20°, an output signal with three reflection peaks, each reflection peak having an average reflection of greater than 50% within a $\pm$ 3° range of the elevation angle.

FIG. 1

## Description

## BACKGROUND

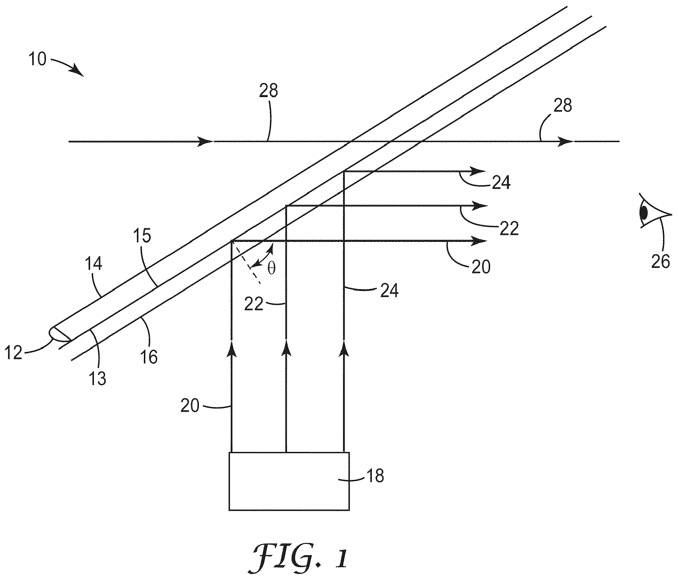

Automotive heads-up displays (HUD) provide real-time information to drivers in a convenient and safe way. Referring to the schematic diagram in FIG. 1, a HUD system 10 for a vehicle includes an optical combiner 12 between an exterior windshield glass layer 14 and an interior windshield glass layer 16. A projector 18, which includes a light source such as a laser or a LED, emits polarized or unpolarized narrow band red light 20, green light 22, and blue light 24, which are incident on a first surface 13 of the combiner 12 at a selected oblique incident elevation angle $\theta$. The first surface 13 of the combiner 12 specularly reflects the red/green/blue (RGB) light toward an eye 26 of an observer (vehicle driver) to create a desired virtual image. While being highly reflective to the narrow band RGB light 20, 22, 24 at the elevation angle $\theta$, the combiner 12 should also be highly transmissive to unpolarized broad band ambient light 28 incident on the second surface 15 thereof to provide high transparency to an external view through the windshield by the observer 26.

The combiner 12 should be highly transmissive to light coming through the windshield, except within a small but finite angle at three selective wavelengths near the red, green and blue wavelengths emitted by the projector. Low-cost and mass producible materials for HUD display combiners are needed that can provide both narrow band reflection for polarized input signals at oblique incident elevation angles, and high transmission of unpolarized ambient light.

## SUMMARY

In some examples, resonant waveguide gratings (RWG) include periodic structures that support leaky guided modes via coupling to propagating incident waves. In general, the present disclosure is directed to single or doubly periodic RWGs that provide high reflection at selected wavelengths and polarizations for oblique incidence, while maintaining large transmission for unpolarized broadband excitation, and as such are useful in applications including, but not limited to, optical combiners for heads-up displays (HUD). Since RWGs are inherently dispersive, the resonance wavelength of a mode at a particular solid angle excitation may shift by an amount comparable or larger than the linewidth (instead of disappearing) when the excitation angle changes by few degrees. In some examples, RWGs with doubly periodic structures can provide enhanced angular tolerance. For example, RWGs can provide RGB selectivity while still maintaining a good angular dispersion, and meet the relevant metrics of performance for a wide range of applications, including automotive displays like HUDs.

The optical combiners of the present disclosure include a first structured layer including a periodic arrangement of structures made of a material with a first refractive index. A second layer having a second refractive index overlies the structures on the first structured layer. The difference between the first refractive index and the second refractive index is less than about 1.5. For a polarized or unpolarized input signal incident on the first structured layer from air at an oblique elevation angle of greater than about 20°, such as, for example, red/green/blue (RGB) input light, the optical combiner produces an output signal with three reflection peaks, each reflection peak having an average reflection of greater than about 50% within a ± 3° range of the elevation angle.

The optical combiners of the present disclosure utilize inexpensive and widely available materials, and can be manufactured on a larger scale at relatively low cost using, for example, a roll-to-roll manufacturing process.

In one aspect, the present disclosure is directed to an optical combiner that includes a first layer with a periodic arrangement of structures of a material having a first refractive index. A second layer overlies the structures on the first layer, and the second layer includes a material with a second refractive index. A difference between the first refractive index and the second refractive index, measured at 587.5 nm, is less than about 1.5. The periodic arrangement of structures is configured such that the optical combiner produces, for an input signal incident on the first layer from air at an oblique elevation angle of greater than about 20°, an output signal with three reflection peaks, each reflection peak having an average reflection of greater than about 50% within a ± 3° range of the elevation angle.

In another aspect, the present disclosure is directed to a windshield for a vehicle, the windshield including: an exterior glass layer, an interior glass layer, and an optical combiner film affixed to the exterior glass layer or the interior glass layer. The optical combiner film includes a first layer with a periodic arrangement of structures, wherein the structures include a material with a first refractive index; a second layer that overlies the structures on the first layer, wherein the second layer includes a material with a second refractive index, and wherein a difference between the first refractive index and the second refractive index, measured at 587.5 nm, is less than about 1.5. The periodic arrangement of structures is configured such that the optical combiner produces, for an input signal incident on the first layer from air at an oblique elevation angle of greater than about 20°, an output signal with three reflection peaks, each reflection peak having an average reflection of greater than about 50% within a ± 3° range of the elevation angle.

In another aspect, the present disclosure is directed to a heads-up display (HUD) system, which includes: a computer with a processor that generates an output having HUD display data; and a projector unit interfaced with the computer, wherein the projector unit that emits a red/green/blue (RGB) signal onto a windshield for display by a viewer. The windshield includes an exterior glass layer, an interior glass layer; and an optical combiner film between the exterior glass layer and the interior glass layer. The optical combiner film includes a first layer with a periodic arrangement of structures, wherein the structures include a material with a first refractive index; and a second layer on the first layer, wherein the cover layer includes a material with a second refractive index, and wherein a difference between the first refractive index and the second refractive index, measured at 587.5 nm, is less than about 1.5. The structures in the first layer are configured such that the optical combiner produces, for the red/green/blue (RGB) signal emitted by the projector unit and incident on the dielectric layer from air at an oblique elevation angle of greater than about 20°, an output signal with three reflection peaks, each reflection peak having an average reflection of greater than about 50% within a ± 3° range of the elevation angle.

In another aspect, the present disclosure is directed to an optical combiner film that includes a structured layer overlain by a cover layer. The structured layer includes a periodic arrangement of structures, and a difference between a refractive index of the structures and a refractive index of the cover layer, measured at 587.5 nm, is less than about 1.5. The structures are configured such that the optical combiner film produces, for an input signal incident on the dielectric layer from air at an oblique elevation angle of greater than about 20°, an output signal with three reflection peaks, each reflection peak having an average reflection of greater than about 50% within a ± 3° range of the elevation angle.

In another aspect, the present disclosure is directed to a method for making an optical combiner film. The method includes: forming a dielectric layer on a polymeric substrate, wherein the dielectric layer has a periodic arrangement of structures, and wherein the structures include a material with a first refractive index; applying a polymeric cover layer on the dielectric layer, wherein the polymeric cover layer includes a material with a second refractive index, and wherein a difference between the first refractive index and the second refractive index, measured at 587.5 nm, is less than about 1.5; and wherein the structures in the dielectric layer are configured such that the optical combiner film produces, for an input signal incident on the dielectric layer from air at an oblique elevation angle of greater than about 20°, an output signal with three reflection peaks, each reflection peak having an average reflection of greater than about 50% within a ± 3° range of the elevation angle.

In another aspect, the present disclosure is directed to method for making an optical combiner film. The method includes forming a periodic arrangement of structures in a polymeric material with a first refractive index; embedding the structures in a dielectric material with a second refractive index, and wherein a difference between the first refractive index and the second refractive index, measured at 587.5 nm, is less than about 1.5;

and wherein the structures in the dielectric layer are configured such that the optical combiner film produces, for an input signal incident on the dielectric layer from air at an oblique elevation angle of greater than about 20°, an output signal with three reflection peaks, each reflection peak having an average reflection of greater than about 50% within a ± 3° range of the elevation angle.

In another aspect, the present disclosure is directed to an optical combiner that includes a first structured layer of a first material with a first refractive index, wherein the first structured layer includes a first periodic arrangement of structures. The optical combiner further includes a second structured layer of a second material with second refractive index, wherein the second structured layer includes a second periodic arrangement of structures different from the first periodic arrangement of structures, wherein the first structured layer and the second structured layer are stacked on each other such that light incident on the first structured layer is diffracted, in succession, by the first structured layer and the second structured layer. The first structured layer and the second structured layer are encapsulated in a third material with a third refractive index such that a refractive index difference, measured at 587.5 nm, between each of the first and the second refractive indices and the third refractive index is less than about 1.5. The structures in the first and the second structured layers are configured such that the optical combiner produces, for an input signal incident on first periodic arrangement of structures from air at an oblique elevation angle of greater than about 20°, an output signal with three reflection peaks, each reflection peak having an average reflection of greater than about 50% within a ± 3° range of the elevation angle.

In another aspect, the present disclosure is directed to a windshield for a vehicle, which includes an exterior glass layer, an interior glass layer; and an optical combiner film between the exterior glass layer and the interior glass layer. The optical combiner file includes a first structured layer of a first material with a first refractive index, wherein the first structured layer includes a first periodic arrangement of structures; and a second structured layer of a second material with second refractive index, wherein the second structured layer includes a second periodic arrangement of structures different from the first periodic arrangement of structures, wherein the first structured layer and the second structured layer are stacked on each other such that light incident on the first structured layer is diffracted, in succession, by the first structured layer and the second structured layer. The first structured layer and the second structured layer are encapsulated in a third material with a third refractive index such that a refractive index difference, measured at 587.5 nm, between each of the first and the second refractive indices and the third refractive index is less than about 1.5. The structures in the first and the second structured layers are configured such that the optical combiner produces, for an input signal incident on first periodic arrangement of structures from air at an oblique elevation angle of greater than about 20°, an output signal with three reflection peaks, each reflection peak having an average reflection of greater than about 50% within a ± 3° range of the elevation angle.

In another aspect, the present disclosure is directed to a heads-up display (HUD) system, which includes a computer with a processor that generates an output comprising HUD display data; a projector unit interfaced with the computer, wherein the projector unit includes a laser that emits a red/green/blue (RGB) signal onto a windshield for display by a viewer. The windshield includes an exterior glass layer, an interior glass layer, and an optical combiner film between the exterior glass layer and the interior glass layer. The optical combiner film includes a first structured layer of a first material with a first refractive index, wherein the first structured layer has a first periodic arrangement of structures, and a second structured layer of a second material with second refractive index, wherein the second structured layer includes a second periodic arrangement of structures different from the first periodic arrangement of structures, and wherein the first structured layer and the second structured layer are stacked on each other such that light incident on the first structured layer is diffracted, in succession, by the first structured layer and the second structured layer. The first structured layer and the second structured layer are encapsulated in a third material with a third refractive index such that a refractive index difference, measured at 587.5 nm, between each of the first and the second refractive indices and the third refractive index is less than about 1.5. The structures in the first and the second structured layers are configured such that the optical combiner produces, for the RGB input signal emitted by the projector unit incident on first periodic arrangement of structures from air at an oblique elevation angle of greater than about 20°, an output signal with three reflection peaks, each reflection peak having an average reflection of greater than about 50% within a ± 10° range of the elevation angle.

In another aspect, the present disclosure is directed an optical combiner film. The film includes a first structured layer of a first material with a first refractive index, wherein the first structured layer has a first periodic arrangement of structures; and a second structured layer of a second material with second refractive index, wherein the second structured layer includes a second periodic arrangement of structures different from the first periodic arrangement of structures, wherein the first structured layer and the second structured layer are stacked on each other such that light incident on the first structured layer is diffracted, in succession, by the first structured layer and the second structured layer. The first structured layer and the second structured layer are encapsulated in a third material with a third refractive index such that a refractive index difference, measured at 587.5 nm, between each of the first and the second refractive indices and the third refractive index is less than about 1.5. The structures in the first and the second structured layers are configured such that the optical combiner produces, for an input signal incident on first periodic arrangement of structures from air at an oblique elevation angle of greater than about 20°, an output signal with three reflection peaks, each reflection peak having an average reflection of greater than about 50% within a ± 3° range of the elevation angle.

In another aspect, the present disclosure is directed to a method for making an optical combiner film. The method includes providing a stacked diffraction grating structure including: a first structured layer of a first material with a first refractive index, wherein the first structured layer has a first periodic arrangement of structures; and a second structured layer of a second material with second refractive index, wherein the second structured layer includes a second periodic arrangement of structures, wherein the first structured layer and the second structured layer are stacked on each other such that light incident on the first structured layer passes through the first structured layer and is diffracted by the first structured layer and the second structured layer, in succession. The method further includes encapsulating the first structured layer and the second structured layer in a third material with a third refractive index such that a refractive index difference, measured at 587.5 nm, between each of the first and the second refractive indices and the third refractive index is less than about 1.5. The structures in the first and the second structured layers are configured such that the optical combiner produces, for an input signal incident on first periodic arrangement of structures from air at an oblique elevation angle of greater than about 20°, an output signal with three reflection peaks, each reflection peak having an average reflection of greater than about 50% within a ± 3° range of the elevation angle.

The details of one or more embodiments of the invention are set forth in the accompanying drawings and the description below. Other features, objects, and advantages of the invention will be apparent from the description and drawings, and from the claims.

**BRIEF DESCRIPTION OF DRAWINGS**

     FIG. 1 is schematic cross-sectional view of an heads up display (HUD) for use in a vehicle.
     FIG. 2 is a schematic cross-sectional view of an embodiment of a RWG of the present disclosure. The azimuthal angle α determines the plane of incidence of the input signal. Classical and fully conical mounting correspond to α = 0° and α = 90° respectively. The light incident at the oblique elevation angle θ in the xz-plane is TM polarized (p-polarized) if the electric field is in the plane of incidence and TE polarized (s-polarized) if it is perpendicular to the plane of incidence.
     FIG. 3A is a series of plots showing the structural evolution during the optimization process utilized in designing the periodic structures in the dielectric layer of FIG. 2. The permittivity profiles were selected at the iteration steps of 1, 75 and 150.

FIG. 3B is a plot of reflections at RGB (450, 530 and 600 nm) over the course of the iteration in FIG. 3A.

FIG. 3C is a reflection spectrum of the optimized device, showing three reflection peaks at the wavelength of 450, 560 and 600 nm.

FIG. 4A is a schematic overhead view of an optical combiner of the present disclosure, and FIG. 4B is a plot of the reflectance vs. wavelength of the optical combiner of FIG. 4A in response to TM polarized (p-polarized) light incident on the dielectric grating at an oblique elevation angle of $\theta = 58°$.

FIGS. 5A-E illustrate the performance of an embodiment of a cascaded BG-filter and R-filter. Simulations were done assuming glass as the background medium.

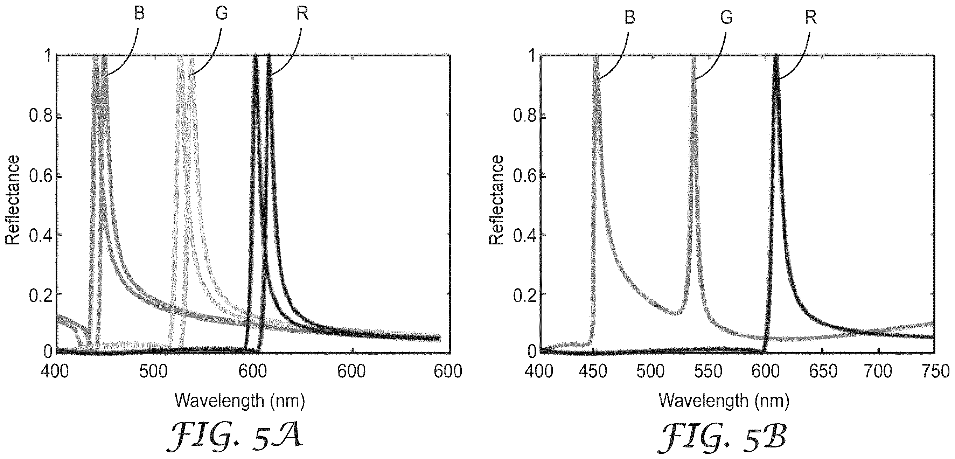

FIG. 5A is a plot of 0th order TE reflectance at $\theta = 55°$ and $\theta = 61°$ for three RWG filters supporting blue, green and red resonances as indicated.

FIG. 5B is a plot of the same response at $\theta = 58°$ of the BG-filter (lines B and G) and R-filter (line R).

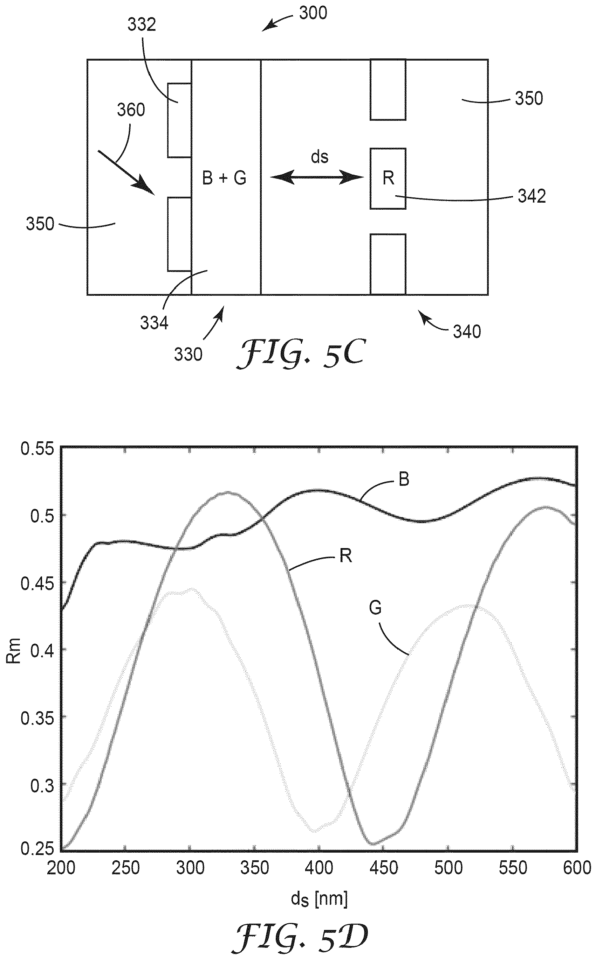

FIG. 5C is a schematic cross-sectional diagram of a cascaded grating design geometry.

FIG. 5D is a plot of the minimum 0th-order reflection $R_m$ as a function of the separation between the filters ($d_S$ in FIG. 5C) near the wavelengths 452 nm, 536 nm and 611 nm.

FIGS. 5E-1 and 5E-2 are plots of reflectance as in FIG. 5A of the cascaded device and the power going into higher order diffraction for TE polarized (s-polarized) light from a cascaded grating (FIG. 5C) having BG and R dielectric grating structures separated by a distance $d_S = 310$ nm.

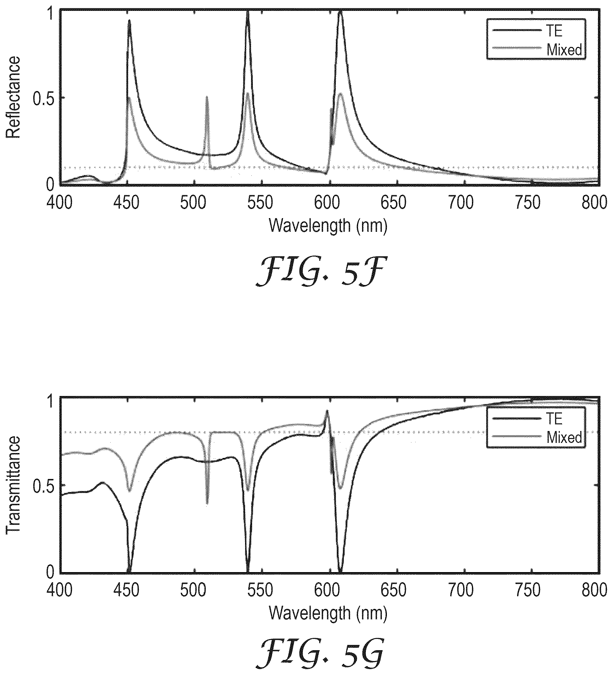

FIGS. 5F and 5G are plots of reflectance and transmittance, respectively, for TE polarized (s-polarized) input light and mixed input light for the encapsulated constructions shown in FIG. 5C.

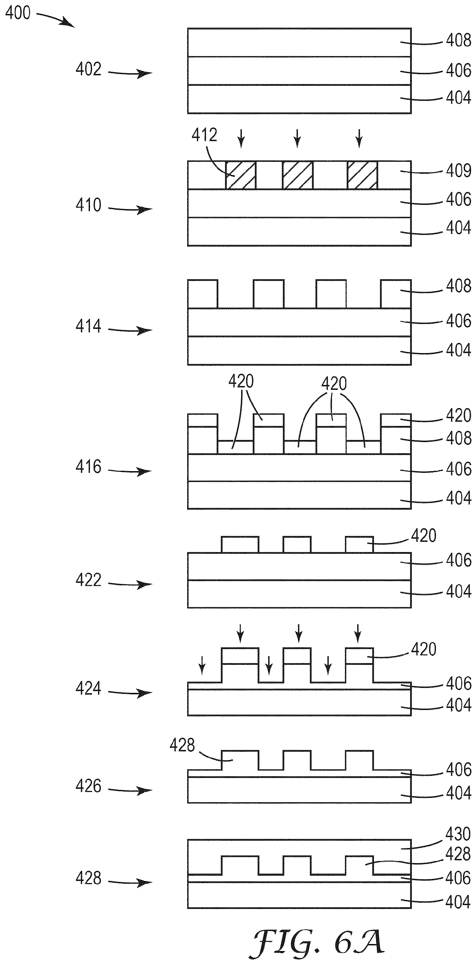

FIG. 6A is a schematic diagram of an embodiment of a process for making the dielectric layers of the present disclosure, which include a periodic arrangement of structures.

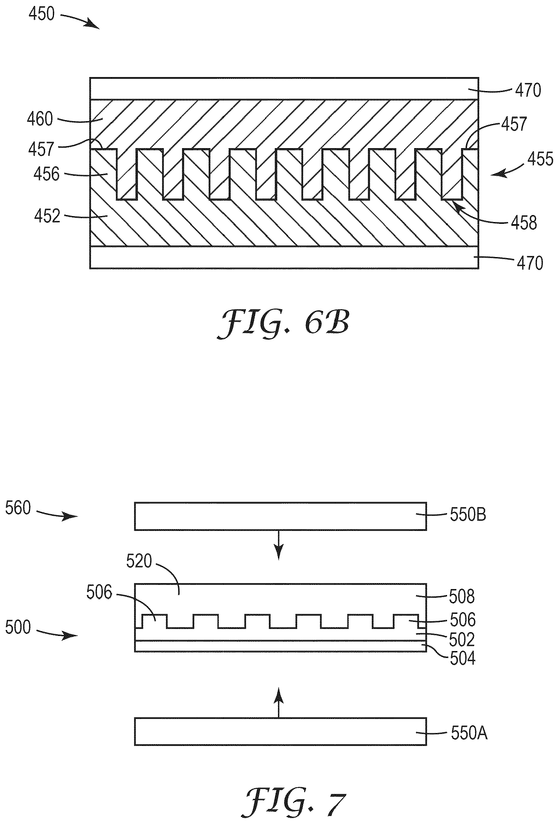

FIG. 6B is a schematic diagram of an embodiment of a process for making the dielectric layers of the present disclosure, which include a periodic arrangement of structures.

FIG. 7 is schematic cross-sectional view of an optical combiner film, which may be laminated between glass sheets to form a windshield constructions for a vehicle or an aircraft.

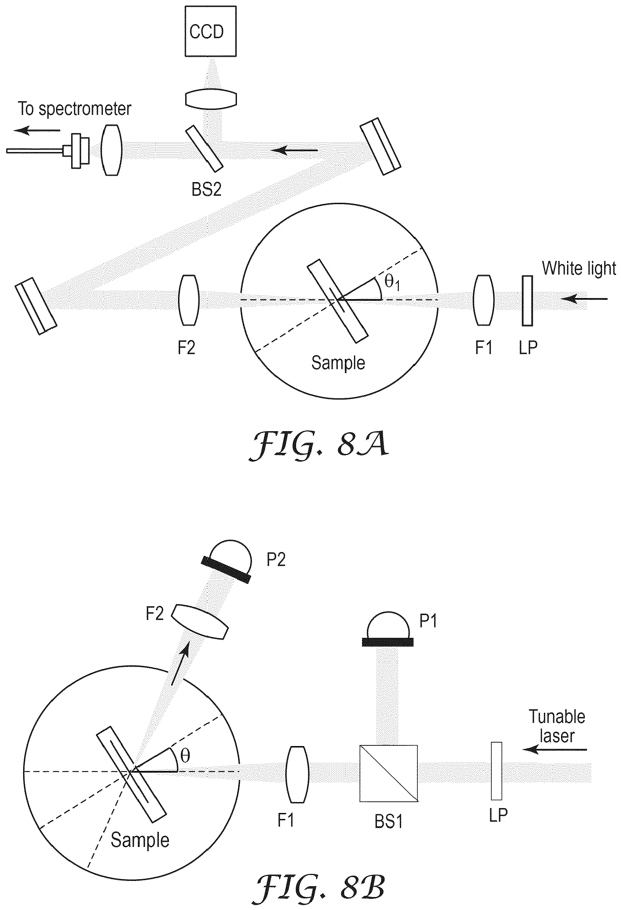

FIGS. 8A-B are schematic diagrams of experimental setups used in Example 1 for measuring transmission (FIG. 8A) and reflection (FIG. 8B). In FIGS. 8A-B, F1, F2 are lenses with a focal length f = 10 cm, LP represents a linear polarizer, BS1, BS2 are beam splitters and CCD is a camera.

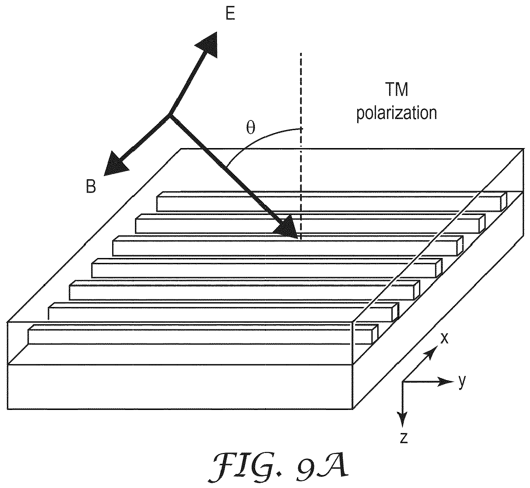

FIGS. 9A-G illustrate the experimental characterization of the TM-based RGB grating of Example 1.

FIG. 9A is a schematic of the sample and the excitation geometry. For TM polarization, the magnetic field lies in the sample plane, and it is orthogonal to grating wires.

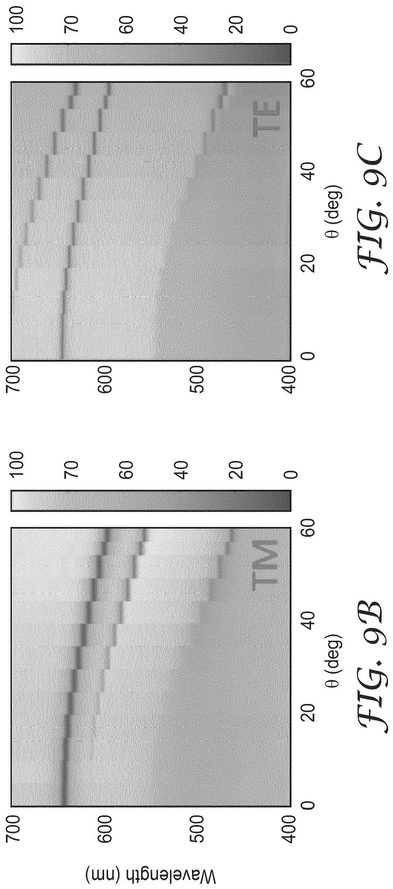

FIGS. 9B-C are measured transmission spectra of the grating versus angle $\theta$ and wavelength for TM (p-polarized) (FIG. 9B) and TE (s-polarized) (FIG. 9C) incident polarization.

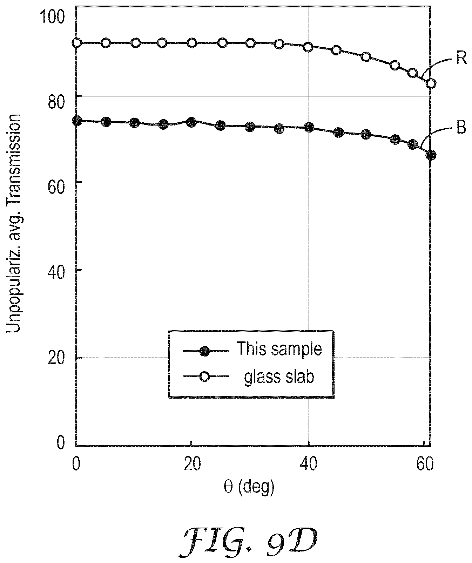

FIG. 9D is a plot of unpolarized averaged transmission versus $\theta$, obtained by averaging the maps in the panels of FIGS. 9B-C and further averaging spectrally.

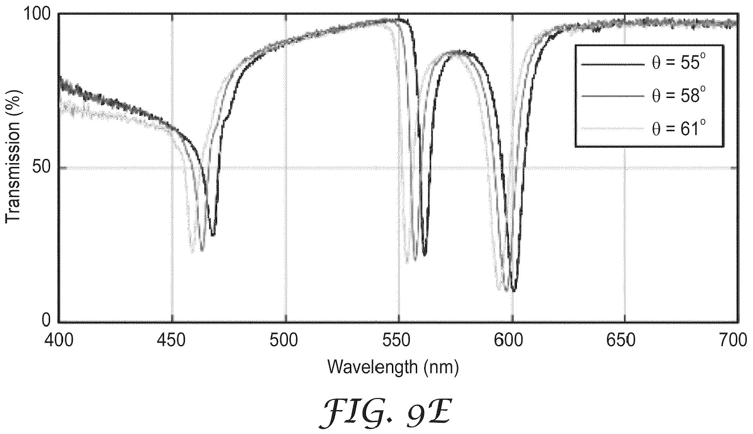

FIG. 9E includes TM transmission spectra at three selected angles.

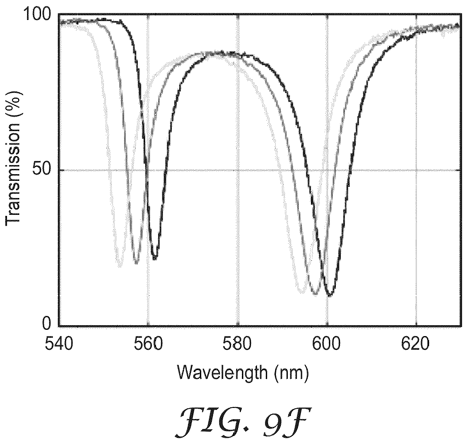

FIG. 9F is a zoom-in of the panel of FIG. 9E.

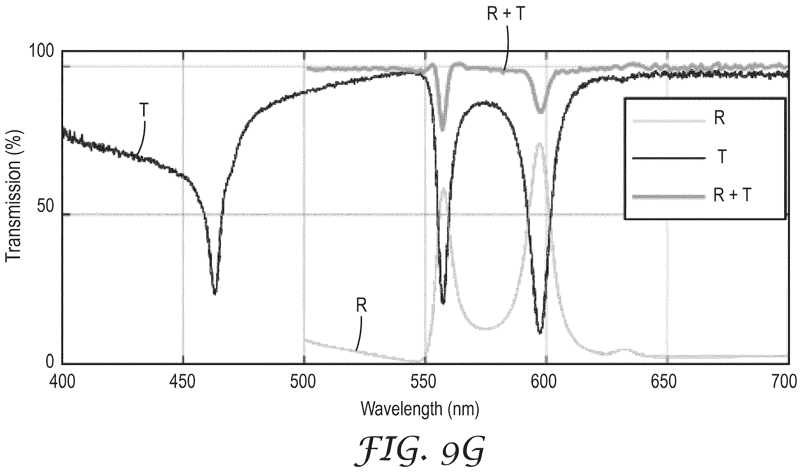

FIG. 9G is a plot of reflection and transmission spectra of the grating at $\theta = 58°$. The thick line R+T shows the sum of the two curves.

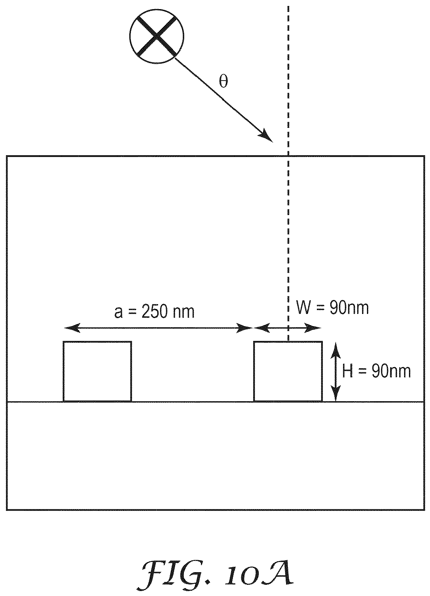

FIGS. 10A-E illustrate the experimental characterization of the TE-based R-filter described in Example 1.

FIG. 10A is a schematic of the sample and the excitation geometry. For TE polarization (s-polarization), the electric field lies in the sample plane, and it is parallel to grating wires.

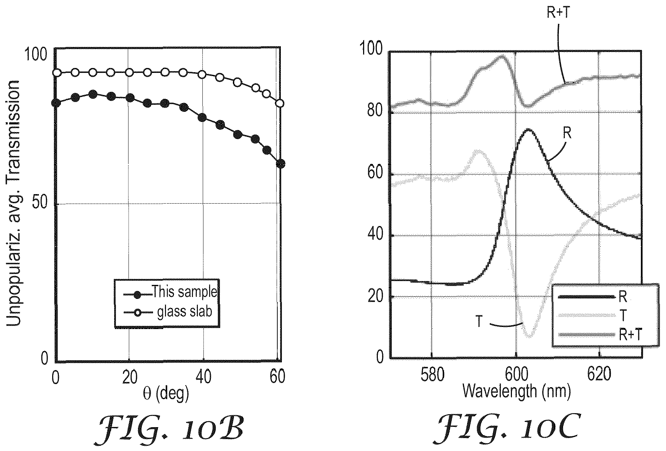

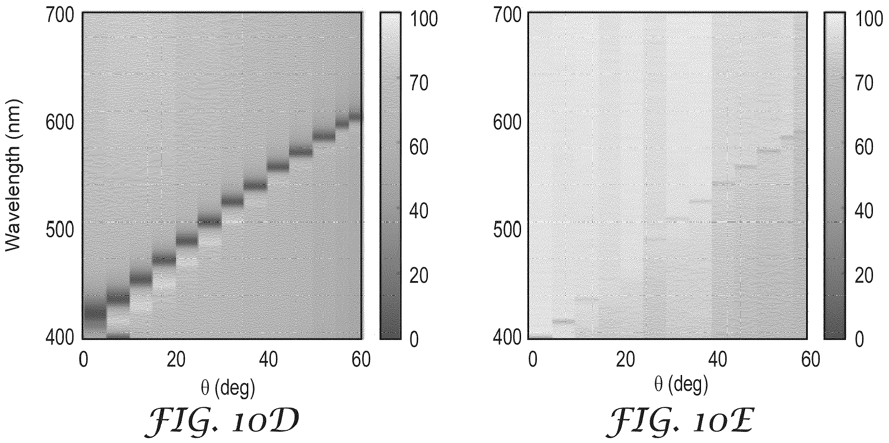

FIG. 10B is a plot of unpolarized averaged transmission versus $\theta$, obtained by averaging the maps in the panels of FIGS. 10D-E and further averaging spectrally.

FIG. 10C shows the reflection (curve R) and transmission (curve T) spectra of the grating at $\theta = 58°$. The curve R+T shows the sum of the two curves.

FIGS. 10 D-E are measured transmission spectra of the grating versus angle $\theta$ and wavelength for TE (FIG. 10D) and TM (FIG. 10E) incident polarization.

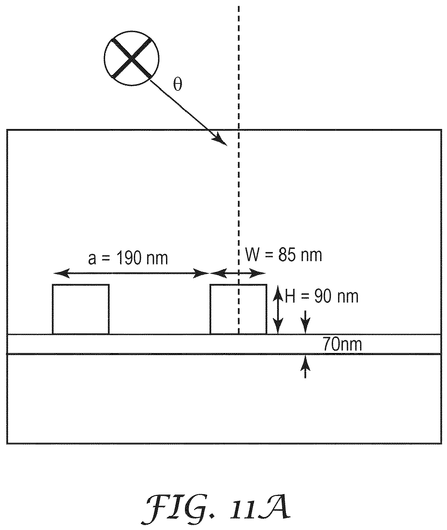

FIGS. 11A-E illustrate the experimental characterization of the TE-based BG-filter of Example 1.

FIG. 11A is a schematic of the sample and the excitation geometry. For TE polarization, the electric field lies in the sample plane, and it is parallel to the grating structures.

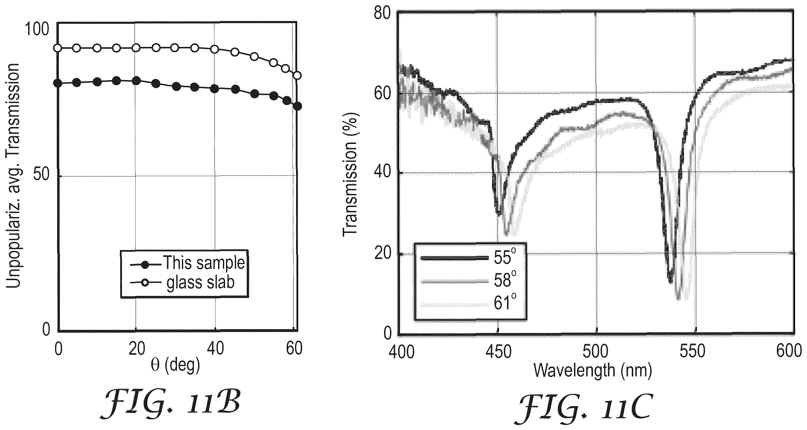

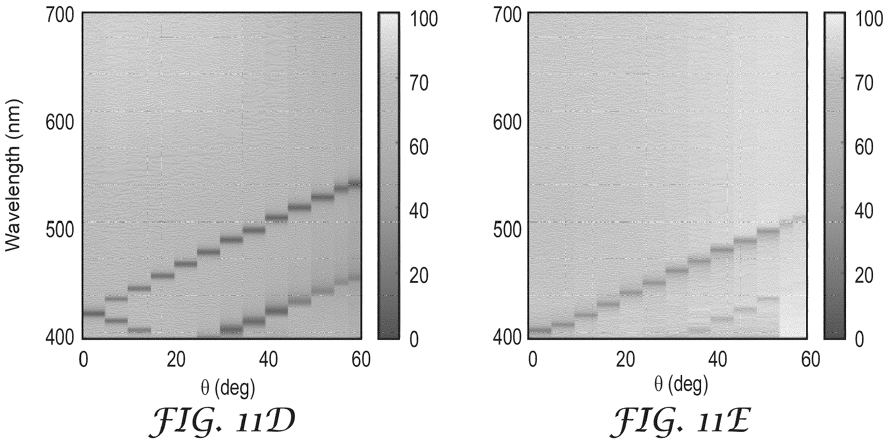

FIG. 11B is a plot of unpolarized averaged transmission versus $\theta$, obtained by averaging the maps in the panels of FIGS. 11D-E, and further averaging spectrally.

FIG. 11C shows TE Transmission spectra at three selected angles.

FIGS. 11D-E are transmission spectra of the grating versus angle $\theta$ and wavelength for TE (FIG. 11D) and TM (FIG. 11E) incident polarization.

Like symbols in the drawings indicate like elements.

## DETAILED DESCRIPTION

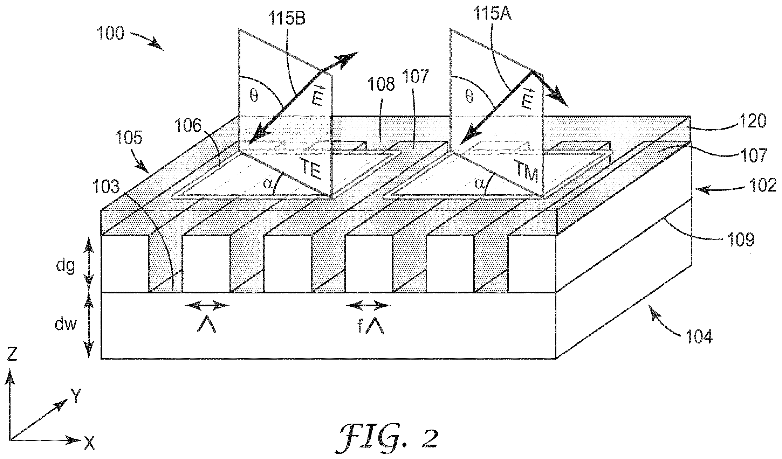

Referring now to FIG. 2, an embodiment of a RWG 100 suitable for use in an optical combiner of the present disclosure includes a first structured layer 102 of a material with a first refractive index, which includes a periodic arrangement 105 of structures 106. A second layer 120 of a material with a second refractive index overlies the structures 106 in the first layer 102, and at least substantially occupies the areas between the structures 106. The difference between the first refractive index and the second refractive index is less than about 1.5. In some examples, the refractive index difference between the first and second refractive indices may be measured at a wavelength of 587.6 nm.

The light incident on the structures 106 can be polarized or unpolarized. FIG. 2 shows two example input signals 115A, transverse magnetic (TM) polarized (p-polarized) light, and 115B, transverse electric (TE) polarized (s-polarized) light. The input signals 115A, 115B are incident on the structures 106 of the first structured layer 102 at an oblique angle $\theta$ of greater than about 20° ($\pm$ 1°), greater than about 30°, greater than about 40°, or greater than about 50°. In some examples, the oblique incident angle $\theta$ is about 40° to about 80°, about 50° to about 70°, about 50° to about 60°, about 55° to about 60°, or about 58°.

In some examples, the input signals 115A, 115B can be polarized narrow band signals such as, for example, signals with red, green, and blue (RGB) visible wavelengths. In some examples, the polarized RGB input signal includes a red band with a wavelength of about 620 nm to about 720 nm, a green band with a wavelength of about 500 nm to about 570 nm, and a blue band with a wavelength of about 460 nm to about 500 nm.

In some examples, the first structured layer 102 is a material with a refractive index of less than about 3. In one example, the first structured layer 102 includes, but is not limited to, materials such as titania or titanium dioxide ($TiO_2$), which has a refractive index n = 2.4. Since silicon is a metalloid, silicon oxides, silicon nitrides, and silicon oxynitrides are considered to be metal oxides, metal nitrides, and metal oxynitrides, respectively. In some cases, titania ($TiO_2$) may be preferred for optical applications involving visible light. Other suitable materials for the first structured layer 102 include zirconia or titania-filled acrylate resins which may be deposited via coating, for example; and metal oxides, nitrides, and oxynitrides including oxides, nitrides, and oxynitrides of Si, Ti, Zr, Hf, Nb, Ta, or Ce, for example, which may be vapor deposited.

In some examples, the second layer 120 may be a polymeric material with a refractive index selected to provide a refractive index difference of less than about 1.5. Suitable examples include, but are not limited to, poly(methylmethacrylate)(PMMA), polycarbonate (PC), polypropylene (PP), polyethylene (PE), polystyrene (PS), polyester, polyimides, and mixtures and combinations thereof.

In some examples, the second layer 120 overlying the structures 106 on the first structured layer 102 may be a material with a refractive index of less than 3 such as, for example, $TiO_2$, or any of the other materials listed above, and the first structured layer 120 may be a polymeric material with a refractive index selected to provide a refractive index difference between the first layer and the second layer of less than about 1.5.

In some embodiments, a second major surface 109 of the first structured layer 102 may be on a first major surface 103 of an optional support layer 104. In some examples, which are not intended to be limiting, the optional support layer 104 may be made of any suitable optical material including glass, polymeric materials such as acrylates, polyethylene terephthalate (PET), polyethylene napthalate (PEN), poly(methylmethacrylate) (PMMA), cyclic olefin polymers (COP), and polycarbonate (PC). The support layer 104 may include single or multiple layers of the same or dissimilar materials. In some examples (not shown in FIG. 2), the support layer 104 may overlie the second layer 120, or may be on both the first structured layer 102 and the second layer 120.

The periodic arrangement of structures 105 in the first structured layer 102 may vary widely depending on the intended application of the optical combiner, and the structures 106 may have any shape, size, and spacing capable of separating the input light 115 into selected component wavelengths. In some embodiments, the periodic arrangement of structures 105 is a linear diffraction grating. In the embodiment of FIG. 2, the structures 106 are parallel linear ridges extending along a y-direction, which are separated by corresponding linear grooves 108. The linear ridges 106 have substantially planar top surfaces 107. In some examples, the ridges 106 extend to a height $d_g$ along the z-direction of about 50 nm to about 800 nm, or 100 nm to about 300 nm, or about 155 nm. The periods A of the ridges along the *x* direction is about 100 nm to about 600 nm, or about 150 nm to about 500 nm, respectively. The width fA of the ridges 106 are such that f= about 0.2 to about 0.8. In various examples, the ridges 108 have an aspect ratio of less than 10:1 (width along the x-direction to height along the z-direction), or less than about 5:1, 3:1, 2:1, or 1:1.

The arrangement of structures 105 in the first structured layer 102 can be designed using a polarization-dependent effective medium theory (EMT). EMT can identify the approximate resonant wavelengths and predict that the number of these resonances increase with the device thickness. Full-wave solutions can be obtained using Rigorous Coupled Wave Analysis (RCWA), which is particularly fast when the tangent wavevector is perpendicular to the wires of the grating.

In one example, the grating structure in the first structured layer 102 can be optimized employing inverse design based on a gradient descent approach using the adjoint optimization technique. In this technique, the structure is defined by a spatially varying permittivity distribution within a rectangular design region. A grating layer thickness $d_g$ was selected, and considering a dispersionless refractive index for both the material of the dielectric layer 102 and a low index material suitable for embedding the dielectric layer (discussed in more detail below), as well as a period A for the ridges 106, the target multifunctional responses of the device are defined in the form of an objective function given by

$$f = \sum_{i=1}^{3} R(\lambda_i)$$

where $R(\lambda)$ is the zero-th order reflection for the desired output wavelengths such as, for example, RGB wavelengths (450, 530 and 600 nm).

The permittivity profiles were optimized to maximize the objective function through an iterative procedure. To determine the gradient of the objective function

$$\frac{df}{d\varepsilon}$$

with respect to permittivity ( ), we implemented an adjoint technique to calculate the gradient within the defined design space from two simulations, namely the forward and adjoint simulations. In the forward simulation, the structure was illuminated by a transverse magnetic (TM) (p-polarized) light incident at an angle θ = 58° in the *xz*-plane.

In the adjoint simulation, the same structure was illuminated by sending back the complex conjugate of the source from the desired reflected direction. The gradient of the objective function is computed from the fields

$$\frac{df}{d\varepsilon}(x,y) = \sum_{i=1}^{3} Re\{E_{forw}(\lambda_i) \cdot E_{adj}(\lambda_i)\}$$

where $E_{forw}$ and $E_{adj}$ are the electric fields from the forward and adjoint simulations, respectively. The design was then updated at each iteration, and the process repeated iteratively until no further improvement on the desired objective function was observed. Meanwhile, a hyperbolic tangent function was used to enforce binarization on the final permittivity distribution.

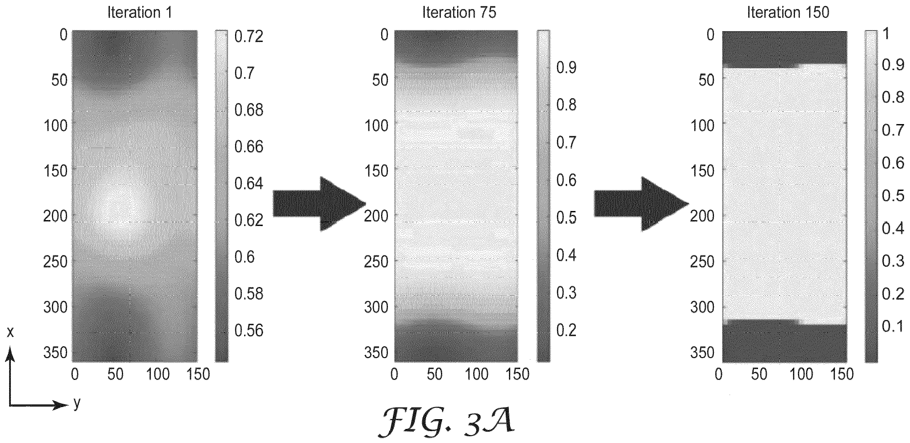

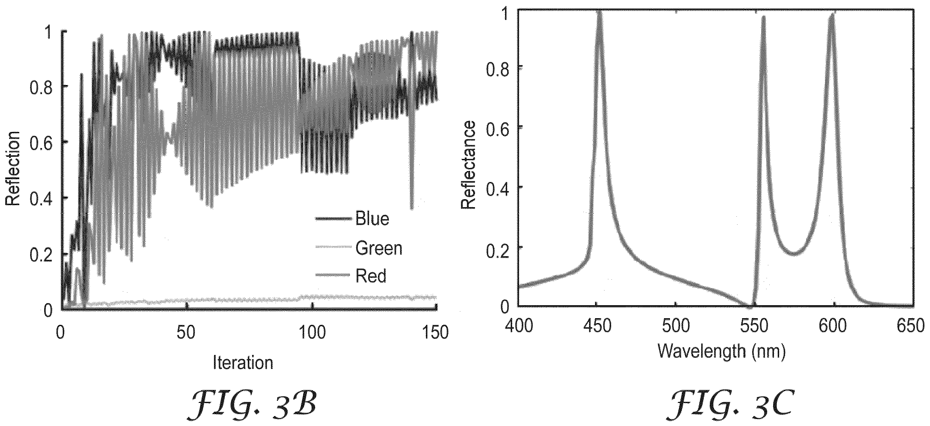

FIG. 3A shows the structural evolution of the in-plane unit cell as the iteration was increased. The permittivity profiles, which initially started from a random distribution, gradually evolved into a 1D grating consisting of a binary permittivity distribution. The corresponding reflectance for the three wavelengths over the course of iteration process is shown in FIG. 3B, which shows that the overall reflections gradually increased for the red and blue wavelengths. While no improvement on the objective function was observed for the green light, the reflection spectrum of the optimized device revealed three reflection peaks at the wavelength of 450, 560 and 600 nm (FIG. 3C), corresponding roughly to the RGB wavelengths. As shown in FIGS. 3A-3C, a single grating device, suitably optimized, can support three distinct narrowband reflection peaks aligned with the target wavelengths for p-polarized incident light.

In some examples, the distinct narrowband reflection peaks of the output signal of the optical combiner 100 of FIG. 2 can be configured to provide an average reflection of greater than about 50%, or greater than about 70%, or greater than about 80%, or greater than about 90%. Each of the average reflection peaks in the output signal can be provided within a range of ± 10°, or ± 5°, or ± 3° of a selected oblique elevation input angle θ. In some examples, the optical combiner 100 can produce the reflection peaks over a wavelength range of about 400 nm to about 700 nm, or about 700 nm to about 2 microns (μm).

In some examples, the optical combiner 100 can provide the reflection peaks in the output signal over a range of azimuthal angles α (FIG. 2) of about -5° to about 5°, or about -3° to about 3°.

To provide good optical performance in an application such as a HUD, a suitable optical combiner 100 should provide desired output signal reflection peaks within a desired range of both elevation angles θ and azimuthal angles α. However, since the azimuthal angle α centers around 0°, in some examples the elevational angle θ can be more sensitive to angular shifts, and as such the discussion of the present disclosure focuses on the elevation angle θ. In the present disclosure, unless a reference to an angle specifically notes that the angle is an azimuthal angle, or an angle α, the angle referred to is the elevation angle θ.

In some examples, the optical combiner 100 has a haze of less than about 1% for transmitted light over a wavelength range for unpolarized light over a wavelength range of about 400 nm to about 700 nm incident on the first layer at any incident angle.

In some examples the optical combiner 100 has a reflection of less than about 10% for unpolarized light over a wavelength range of about 400 nm to about 700 nm incident on the first layer at any incident angle.

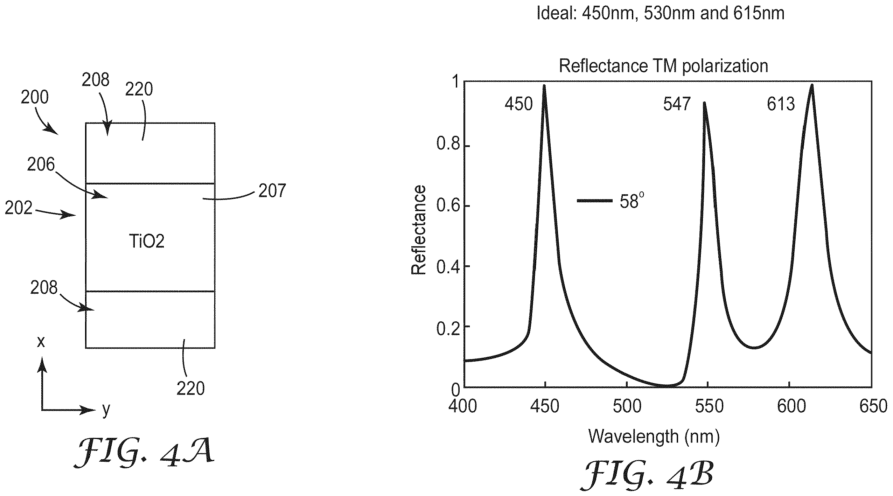

Referring now to FIG. 4A, an overhead view of an example of an optical combiner 200 includes a structured layer 202 of $TiO_2$. The structured layer 202 includes a periodic arrangement of linear ridges 206 (the top surface 207 of a single ridge 206 is shown in FIG. 4A) having a period in the x-direction of 425 nm and separated by grooves 208. The ridges have a length in the x-direction of 300 nm, and the structured layer 202 had a thickness ($d_g$ in FIG. 2) of 137 nm. A cover layer 220 of a polymeric material, in this example a fluorinated acrylate (n = 1.34) was applied over the ridges 206 of the dielectric layer 202, such that the polymeric material 220 occupied the grooves 208 between the ridges, and covered the exposed top surfaces 207 of the ridges 206. As a result, the cover layer 220 encapsulated the structured layer 202.

As shown in the plot of FIG. 4B, the optical combiner, for TM (p-polarized) input light entering the cover layer 220 from air and incident on the grating structures in the structured layer 202 at an oblique elevation angle $\theta$ (FIG. 2) of 58°, had three narrow-band reflective resonances at 450 nm, 547 nm, and 613 nm, which were very close to the calculated target values of 450 nm, 530 nm, and 615 nm. In this example, the narrow-band reflective resonances had an angular tolerance of about 6° about the elevation angle $\theta$.

Using a TM polarized (p-polarized) input signal incident on the dielectric layer has the advantage that, close to the Brewster angle, the reflection at each air-glass interface is near zero, so that the only reflection occurs from the optical combiner layer when the optical combiners of the present disclosure are utilized in a vehicle windshield. When considering TE polarization (s-polarization) at the same angle, interfaces between the optical combiner and any surrounding glass layers (FIG. 1) will reflect about 15% of the input intensity.

In one example, single-resonance gratings were optimized to support single-color operation for TE (transverse electric, or s-polarized) incident light, with the following parameters (FIG. 2): A = 180 nm, f = 0.5, $d_g$ = 50 nm for blue, A = 220 nm, f = 0.32, $d_g$ = 90 nm for green and A = 255 nm, f = 0.24, $d_g$ = 120 nm for red. As shown in the plot of FIG. 5A, these gratings had negligible response for TM (p-polarized) input light and supported a resonance with robust angular response between 55° and 61° for the elevation angle (angle $\theta$ in FIG. 2, which extends generally parallel to a plane of the surface of the periodic structures in the first structured layer) in FIG. 2. These devices were found to be robust against angular variations in the azimuthal direction.

A three-color reflection filter can be formed by increasing the grating height $d_g$ to increase the number of resonances supported.

In another embodiment, the structured layer includes a cascaded arrangement with a plurality of periodic structures stacked on each other, such that incident light successively interacts with the periodic structures. For example, a first periodic structure in the stack can be configured to support a dual resonance, and a second periodic structure in the stack can be configured to support a single resonance. For example, as shown schematically in FIG. 5C, an optical combiner 300 includes a first periodic structure 330 configured to form a dual wavelength filter (for example, selective for blue-green (BG) wavelengths), and a second periodic structure 340 configured to form a single wavelength filter (for example, selected for red (R) wavelengths). The first periodic structure 330 and the second periodic structure 340 are encapsulated in an encapsulating layer 350, and separated from each other by a vertical distance $d_s$.

As shown in FIG. 5C, the first periodic structure is a first diffraction grating 330 that includes parallel linear ridges 332 of a first material on an optional capping layer 334. The second periodic structure 340 is a second diffraction grating with periodic parallel linear ridges 342 extending along the same direction as the ridges 332 in the first periodic structure 330. An input light signal 360 incident on the first periodic diffraction grating 330 at an oblique angle $\theta$ in a plane normal to a plane of the ridges 332 is diffracted first by the first diffraction grating 330, and then by the second diffraction grating 340.

As discussed above with respect to the embodiment of FIG. 2, the structures 332 and 342 may be made of a material with a refractive index of less than about 3 such as, for example, $TiO_2$. The encapsulating layer 350 may be a polymeric material with a refractive index selected to provide a refractive index difference of less than about 1.5 with respect to the refractive index of the structures 332, 342. In some examples, the encapsulating layer 350 may be a dielectric material such as $TiO_2$, and structures 332, 342 may be made of a polymeric material with a refractive index selected to provide a refractive index difference of less than about 1.5 between the dielectric material and the polymeric material.

The optional capping layer 334, if present, may be formed from the same material as the structures 332, or a different material.

Referring now to the plot of FIG. 5B, in one example the 0th order reflection at an input angle $\theta$ = 58° is plotted for both the first diffraction grating 330 of FIG. 5C, and the second diffraction grating 340 of FIG. 5C, considered separately, assuming parameters A = 190 nm, f= 0.37, $d_g$ = $d_w$ = 85 nm for the BG-filter (see also diagram in FIG. 2 for explanation of dimensional parameters for the periodic structures). In the example of FIG. 5B, the minimum 0th-order reflection between 55° and 61° (denoted by $R_{m(\lambda)}$) at $\lambda$ = 452 nm, 536 nm (BG-filter) and 611 nm (R-filter) is 0.52, 0.35 and 0.35 respectively. At periods greater than 190 nm, higher diffractive orders begin to arise, which in some cases may produce a rainbow effect for the second diffraction grating 340.

When the structured elements are cascaded, the tops of the reflection bands can flatten, and the angular sensitivity can be reduced. In some examples, the spacing $d_s$ between the first and second diffraction gratings 330, 340 if sufficiently large such that evanescent coupling is negligible, and the spectra is therefore independent of lateral displacement. The numerical tool used for simulations, RCWA, requires the simulated structure to have a fixed periodicity, while the gratings 330, 340 have different pitches. To overcome this problem, a super period, $\lambda_{super}$ = 765 nm, is defined that is a common multiple of the two periods and repeat unit cells accordingly ($n\Lambda1\Lambda2$). Fabry-Perot interference is observed, and as $d_s$ increases the three wavelengths for which $R_m$ is greatest are slightly perturbed.

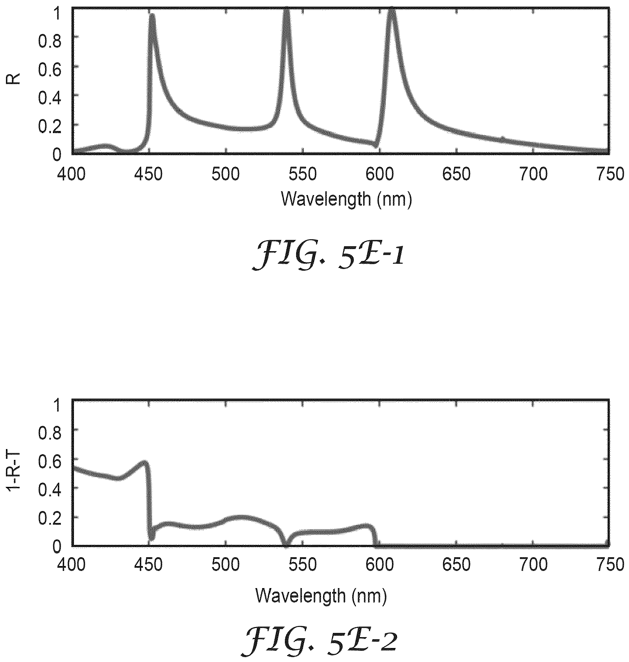

FIG. 5D shows $R_m$ at these wavelengths as a function of $d_s$, from which we identify $d_s \approx 300$ nm as the optimal spacing. Despite $R_m$ at the blue wavelength decreases to 0.47, it increases to 0.44 and 0.5 at green and red. The example in FIG. 5D displays a greater interference amplitude for the red resonance than for the green, which is understood by the fact that the reflectance tail of the first diffraction grating (BG-filter) is higher at red wavelengths than the reflectance tail of the second diffraction grating (R-filter) is at green wavelengths. The reflectance spectrum of the cascaded device is given in FIG. 5E-1 along with the power leakage into higher diffraction orders (FIG. 5E-2), which originates primarily from the first diffraction grating 330 (BG-filter) and the second diffraction grating 340 (R-filter) than from the cascading configuration.

Plots of reflectance and transmittance for TE polarized light and mixed (unpolarized) light for these encapsulated constructions are shown in FIGS. 5F and 5G, respectively.

Referring now to FIG. 6A, in another aspect the present disclosure is directed to a method for making the optical combiners shown in FIGS. 2 and 5C above. In the method 400, in step 402 a layer of glass 404 with a layer 406 of $TiO_2$ thereon has applied thereto by a spin coating process a layer 408 of e-beam resist. In step 410, the e-beam resist layer 408 is exposed to e-beam in selected areas 412. In step 414, the e-beam resist is developed in the e-beam exposed areas 412 and removed.

In step 416, a metal such as, for example, Ni, is deposited on the e-beam resist layer 408, which forms an alumina layer 420 on the ridges and in the grooves between the ridges. In step 422, the e-beam resist layer 408 is removed, leaving behind Ni ridges on the surface of the titania layer 406 and creating a hard mask.

In step 424, the $TiO_2$ is etched through the hard mask from step 422, and in step 426 the mask is removed, leaving behind a pattern of ridges 428 in the titania layer 406.

In step 426, a layer 430 of a polymer is spin coated on the titania layer 406. The polymer layer 430 overlies the ridges 428 and the grooves therebetween, which encapsulates the grating structure in the titania layer 406.

In another embodiment shown in FIG. 6B, a method 450 for making an optical combiner includes providing a structured polymeric film 452 including a periodic arrangement 455 of linear ridges 456 separated by corresponding linear grooves 458. The structured polymeric film may be coated with an encapsulating layer 460 of a dielectric material such as, for example, $TiO_2$, such that the dielectric material covers the tops 457 of the linear ridges 456 and occupies the linear grooves 458 between the linear ridges 456. In some examples, the $TiO_2$ may be coated with any suitable method such as, for example, atomic layer deposition (ALD), chemical vapor deposition (CVD), physical vapor deposition (PVD), or combinations thereof.

One or more optional support layers 470 may be added on the dielectric layer 460 or on the polymeric film 452.

As shown in FIG. 7, in another aspect, the present disclosure is directed to an optical combiner film 500 that includes one or more optional support layers 504, a structured layer 502 with periodic linear ridges 506 separated by corresponding grooves 508, and a cover or encapsulating layer 520. The structured layer 502 may include a singly periodic structure such as shown in FIG. 2, or a cascaded periodic structure as described above in FIG. 5C.

In some examples, the combiner film 500 may be manufactured at relatively low cost using a roll-to-roll process, and may easily be made or cut into large formats for use in optical displays, windshields, and the like.

Referring again to FIG. 7, in some examples, the optical combiner film 500 can be laminated between glass layers 550A, 550B to form a windshield construction 560 for use in a vehicle, aircraft, and the like. In some examples, the optical combiner film 500 can be laminated to either of glass layers 550A, 550B, or may even be laminated to an interior surface of the windshield proximal the vehicle or aircraft operator.

As shown schematically in FIG. 1, the windshield construction 560 may be incorporated into a heads up display (HUD) system for use in vehicles, aircraft, and the like.

The devices of the present disclosure will now be further described in the following nonlimiting examples.

## EXAMPLE

Based on the numerical optimization procedures described above, one-dimensional (1D) titania gratings were immersed into an = 1.5 polymeric embedding layer, and evaluated for TM (p-polarized) and TE (s-polarized) operation.

The gratings were fabricated with a standard top-down lithographic process shown schematically in FIG. 6. A layer of $TiO_2$ was deposited on a 1-mm-thick quartz substrate and etched down to desired thickness. A bi-layer of electron beam resist (polymethylmethacrylate (PMMA) 495 A2 and 950 A2 available from, for example, MicroChem, Newton, MA) was spin-coated on top of the titania and the grating pattern was written with an electron beam tool (Elionix 100 keV, available from Elionix, Inc., Tokyo, JP). After development, a 30-nm-thick layer of nickel was deposited via e-beam evaporation and the resist was lifted off via an overnight bath in a stripping solvent (Remover PG from Kayaku Advanced Materials, Westborough, MA).

The obtained nickel pattern was used as a mask for a $CF_4$-Argon-$O_2$ dry etching process performed in an ICP machine (Oxford PlasmaPro System 100 Cobra, available from Oxford Instruments, Bristol, UK). The residual nickel mask was then removed via wet etching.

To embed the titania grating into an = 1.5 dielectric environment, a thin layer of PMMA was first spin-coated on top of the grating. A denser version of the same polymer (PMMA A11, also available from MicroChem) was then drop-cast on top of the sample and used as an adhesion layer to glue a 1-mm-thick microscope coverslip.

The fabricated gratings had in-plane dimensions of about 700-1000 microns ($\mu$m).

The angle-dependent transmission and reflection spectra were acquired by placing the sample on a motor-controlled rotation stage as shown in FIGS. 8A-B, which allowed accurate control of the input angle $\theta$. For transmission measurements (FIG. 8A), a broadband white light was linearly polarized and weakly focused on the sample (focal length f=10 cm) to obtain an excitation spot with a diameter of about 300 $\mu$m. This excitation configuration was chosen as a compromise to ensure that the beam spot was smaller than the grating cross section even for large angles $\theta$, while simultaneously minimizing the excitation angular spread.

The beam was collected from the other side of the sample with an identical lens and directed either to a CCD camera (for alignment purposes) or to a fiber coupled spectrometer. For each angle the lamp spectra transmitted through the grating, $S_{grat}(\lambda, \theta)$ was acquired, and through the bare glass-like substrate, $S_0(\lambda, \theta)$, and

$$T(\lambda, \theta) \equiv \frac{S_{grat}(\lambda,\theta)}{S_0(\lambda,\theta)}$$

the transmission spectra was calculated. This procedure properly takes into account the lateral beam shifts introduced by the thick glass substrate at large angles, which can alter the collection efficiency. Due to the normalization used, $T(\lambda, \theta)$ does not include the effect of the air/glass and glass/air interfaces. To correct for this, the angle-dependent incoherent transmission spectrum was calculated through a thick glass slab, $T_{glass}(\lambda, \theta)$, which was used to calculate the absolute transmission of the sample, $T_{abs}(\lambda, \theta) = T(\lambda, \theta) \times T_{glass}(\lambda, \theta)$.

For reflection measurements (FIG. 8B), a linearly polarized tunable laser (SuperK Fianium, available from NKT Photonics, Boston, MA) was used as a source. Before being focused on the sample, a portion of the laser was extracted with a beam splitter and directed to a power meter (P1) for power calibration. The beam reflected by the grating was collimated by a lens and measured by a second power meter (P2). Both collecting lens and power meter P2 were placed on a second rotation stage, whose angle is set to 180°-2$\theta$ to measure the specular reflection. The absolute reflection spectra were then obtained by sweeping the excitation wavelength and recording the powers measured by P1 and P2.

The results for the three-color TM device are shown in FIG. 9. FIG. 9B shows the sample transmission versus wavelength and incident angle for the designed input polarization, TM, or p-polarized (as sketched in FIG. 9A). For small angles, the spectrum was dominated by a single mode at $\lambda \approx 640$ nm. At lower wavelengths ($\lambda <$ 550 nm), transmission was lowered due to the onset of the first diffraction order. As the angle increased, two additional modes appeared, whose excitation at $\theta = 0°$ was not possible due to the symmetry of their fields.

Around the angle of operation ($\theta = 58°$) the dips of the three modes align well with the desired wavelengths (FIGS. 9E-F), in agreement with FIG. 3C.

The transmission spectra for the opposite polarization, TE, or s-polarized (FIG. 9C) also showed three dips, although with narrower linewidths. As mentioned above, an important figure of merit to ensure that these devices can be used for virtual reality applications is that, apart from the wavelengths of operation, they are mainly transmissive for an unpolarized broadband signal in the visible range. To quantify this metric, the average was calculated between the two datasets in FIGS. 9B-C (to emulate an unpolarized beam), and further averaged across the wavelengths in the visible range. The obtained curve (FIG. 9D, curve B) shows that the average unpolarized transmission is about 75% at normal incidence, while it drops to about 65% at the angle of operation $\theta = 58°$. The slow decrease of the average transmission as $\theta$ increases is mainly attributed to the reduced transmission of the TE component at large angles, due to the large reflection at the air/glass interfaces at large angles. For comparison, the curve R in FIG. 9D shows the average unpolarized transmission for a thick glass slab.

To confirm that the transmission dips were due to large reflection, and to quantify the loss, reflection spectra were measured at select angles using the apparatus in FIGS. 8A-B. In FIG. 9G the reflection spectra at $\theta = 58°$ (line B) were compared with the transmission spectra (line R) at the same angle. The transmission dip at $\lambda \approx 560$ nm and $\lambda \approx 600$ nm were accompanied by corresponding reflection peaks, with almost equal magnitude. The sum of the transmission and reflection spectra ("R+T", thick line Y in FIG. 9G) was unitary off-resonance. On resonance, the R+T drops by about 15-20%, indicating the presence of loss. While not wishing to be bound by any theory, the evidence indicated that this drop can be attributed to fabrication imperfections, and to some residual of the metallic mask used for fabrication.

The results for the TE based R-filter are shown in FIG. 10 with the configuration sketched in FIG. 10A. The average unpolarized transmission (FIG. 10B) was about 80% at normal incidence and drops off faster than the transmission of the slab at large angles. At $\theta = 58°$, the reflection/transmission resonance (FIG. 10C) is located near 600 nm as predicted, and the level of loss is comparable to the one seen in FIG. 9G. At all angles, the spectrum in the visible was shown to only support a single TE and TM mode, with the TM mode being much narrower.

The response of the BG-filter (FIG. 11) is also shown to match the calculations well. An additional mode appears at short wavelengths, which also can be seen to exist in the R-filter. The sub-optimal transmission dip for the green resonance (FIG. 11C) is attributed to the surface roughness of the sample used, and it can be understood as resulting from Rayleigh scattering which, given its $\lambda^4$ dependence, has a much larger impact for shorter wavelengths. Interestingly, in the TM measurement we observed a narrowing of the resonance linewidth of the supported mode due to an accidental quasi-bound state in the continuum, which further improves the response of the grating.

Comparing TE (s-polarized) and TM (p-polarized) operation, when grating is optimized for TE response, it was found that its TM response was characterized by very narrow resonances, which made it easier to increase the average unpolarized transmission. On the other hand, TE operation suffered from the unavoidable large reflection at the glass/air interfaces at large angles.

## Claims

1. An optical combiner, comprising:

   a first layer comprising a periodic arrangement of structures, wherein the structures comprise a material with a first refractive index;
   a second layer that overlies the structures on the first layer, wherein the second layer comprises a material with a second refractive index, and wherein a difference between the first refractive index and the second refractive index, measured at 587.5 nm, is less than 1.5; and
   wherein the periodic arrangement of structures is configured such that the optical combiner produces, for an input signal incident on the first layer from air at an oblique elevation angle of greater than 20°, an output signal comprising three reflection peaks, each reflection peak having an average reflection of greater than 50% within a $\pm$ 3° range of the elevation angle.

2. The optical combiner of claim 1, wherein the elevation angle is between 50° to 60°.

3. The optical combiner of claim 1, wherein the input signal is polarized.

4. The optical combiner of claim 3, wherein the input signal is TM polarized (p-polarized).

5. The optical combiner of claim 4, wherein the input signal comprises red, blue and green (RGB) wavelengths of visible light.

6. The optical combiner of claim 1, wherein the output signal comprises the reflection peaks over a wavelength range of 400 nm to 2 microns ($\mu$m).

7. The optical combiner of claim 1, wherein the optical combiner produces the output signal over an azimuthal angular range of -5° to 5° in a plane normal to a plane of incidence of the input signal.

8. The optical combiner of claim 1, wherein the structures in the first layer comprise a plurality of parallel ridges extending along a first direction, wherein the ridges are separated by linear grooves.

9. The optical combiner of claim 1, wherein the first layer comprises a polymeric material with a refractive index of 1.2 to 1.55 over a wavelength range of 400 nm to 700 nm, and the second layer comprises $TiO_2$.

10. An optical combiner, comprising:

    a first structured layer of a first material with a first refractive index, wherein the first structured layer comprises a first periodic arrangement of structures; and
    a second structured layer of a second material with second refractive index, wherein the second structured layer comprises a second periodic arrangement of structures different from the first periodic arrangement of structures, wherein the first structured layer and the second structured layer are stacked on each other such that light incident on the first structured layer is diffracted, in succession, by the first structured layer and the second structured layer;
    wherein the first structured layer and the second structured layer are encapsulated in a third material with a third refractive index such that a refractive index difference, measured at 587.5 nm, between each of the first and the second refractive indices and the third refractive index is less than 1.5; and
    wherein the structures in the first and the second structured layers are configured such that the optical combiner produces, for an input signal incident on first periodic arrangement of structures from air at an oblique elevation angle of greater than 20°, an output signal comprising three reflection peaks, each reflection peak having an average reflection of greater than 50% within a $\pm$ 3° range of the elevation angle.

11. The optical combiner of claim 10, wherein the first refractive index is equal to the second refractive index.

12. The optical combiner of claim 10, wherein the first periodic arrangement of structures is configured to produce a first and a second reflection peak in the output signal, and the second periodic arrangement of structures is configured to produce a third reflection peak in the output signal.

13. The optical combiner of claim 10, wherein the first arrangement of structures comprises a linear diffraction grating with a plurality of parallel ridges extending along a first direction, wherein the ridges are separated by linear grooves, and wherein the structures in the second arrangement of structures comprise a linear diffraction grating having a plurality of parallel ridges extending along the first direction, wherein the ridges are separated by linear grooves.

14. The optical combiner of claim 10, wherein the first structured layer and the second structured layer are a distance of less than 200 nm apart.

15. The optical combiner of claim 10, wherein the first structured layer and the second structured layer comprise a polymeric material with a refractive index of 1.2 to 1.55, and the encapsulating layer comprises $TiO_2$.

*FIG. 1*

*FIG. 2*

Iteration 1      Iteration 75      Iteration 150

*FIG. 3A*

EP 4 206 789 A1

*FIG. 3B*

*FIG. 3C*

FIG. 4A

Ideal: 450nm, 530nm and 615nm

Reflectance TM polarization

FIG. 4B

EP 4 206 789 A1

FIG. 5A

FIG. 5B

*FIG. 5C*

*FIG. 5D*

*FIG. 5E-1*

*FIG. 5E-2*

FIG. 5F

FIG. 5G

400

402 →

408
406
404

412

410 →

409
406
404

414 →

408
406
404

420        420

416 →

420
408
406
404

420

422 →

406
404

424 →

420
406
404

428

426 →

406
404

428 →

430
428
406
404

*FIG. 6A*

450

470

460

457

456

452

457

455

458

470

*FIG. 6B*

560

550B

520

506

500

508

506

502

504

550A

*FIG. 7*

*FIG. 8A*

*FIG. 8B*

FIG. 9A

FIG. 9B

FIG. 9C

*FIG. 9D*

*FIG. 9E*

FIG. 9F

*FIG. 9G*

*FIG. 10A*

FIG. 10C

FIG. 10B

*FIG. 10D*

*FIG. 10E*

33

*FIG. 11A*

*FIG. 11B*

*FIG. 11C*

**FIG. 11D**

**FIG. 11E**

EP 4 206 789 A1

Europäisches
Patentamt

European
Patent Office

Office européen
des brevets

# EUROPEAN SEARCH REPORT

**Application Number**

**EP 22 21 3685**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLAUME BASSET: "Meta Resonant Waveguide-Gratings Providing Selective Diffraction", ARXIV.ORG, CORNELL UNIVERSITY LIBRARY, 201 OLIN LIBRARY CORNELL UNIVERSITY ITHACA, NY 14853, 9 August 2020 (2020-08-09), XP081737410, | 1-8,10, 11,13 | INV. G02B27/01 G02B5/26 G02B5/28 G02B27/10 G02B5/18 G02B5/20 |
| Y | *chapter III,i-iii * *chapter IV,iv,v*; figures 3,8,24,25 ----- | 9,12,14, 15 | |
| Y | EP 1 739 751 B1 (SUISSE ELECTRONIQUE MICROTECH [CH]) 2 July 2008 (2008-07-02) * paragraphs [0019] - [0022]; figure 4 * ----- | 9,15 | |
| Y | US 2012/019923 A1 (NIESTEN MAARTEN [US]) 26 January 2012 (2012-01-26) * paragraphs [0033], [0066]; figure 2 * ----- | 12 | |
| Y | US 2007/263285 A1 (WALTER HARALD [CH] ET AL) 15 November 2007 (2007-11-15) * paragraph [0021]; figure 1 * ----- | 14 | TECHNICAL FIELDS SEARCHED (IPC) G02B |

The present search report has been drawn up for all claims

| Place of search | Date of completion of the search | Examiner |
|---|---|---|
| Munich | 3 May 2023 | Blau, Gerd |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 3685

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| EP 1739751 | B1 | 02-07-2008 | AT | 400062 T | 15-07-2008 |
| | | | EP | 1739751 A1 | 03-01-2007 |
| | | | JP | 5037044 B2 | 26-09-2012 |
| | | | JP | 2007013188 A | 18-01-2007 |
| | | | US | 2007002414 A1 | 04-01-2007 |
| US 2012019923 | A1 | 26-01-2012 | NONE | | |
| US 2007263285 | A1 | 15-11-2007 | EP | 1814743 A1 | 08-08-2007 |
| | | | US | 2007263285 A1 | 15-11-2007 |
| | | | WO | 2006038120 A1 | 13-04-2006 |

For more details about this annex : see Official Journal of the European Patent Office, No. 12/82